**Europäisches Patentamt**

**European Patent Office**

**Office européen des brevets**

(11) Veröffentlichungsnummer: **0 457 157 A2**

# EUROPÄISCHE PATENTANMELDUNG

(21) Anmeldenummer: 91107380.7

(22) Anmeldetag: 07.05.91

(51) Int. Cl.⁵: **E04D 11/00, A01G 9/00**

(30) Priorität: 14.05.90 DE 4015425

(43) Veröffentlichungstag der Anmeldung:
21.11.91 Patentblatt 91/47

(84) Benannte Vertragsstaaten:
AT BE CH DE LI NL

(71) Anmelder: Gutjahr, Walter, Jr.
Ernst-Ludwig-Weg 29
W-6101 Bickenbach(DE)

(72) Erfinder: Gutjahr, Walter, Jr.
Ernst-Ludwig-Weg 29
W-6101 Bickenbach(DE)

(54) **Begrünungs-, Drain- und Staumatte.**

(57) Die Erfassung betrifft eine Begrünungs-Drain- und Staumatte aus profiliertem, druckfestem Kunststoff, die unter begrünten Dachflächen als Be- und Entwässerungschicht eingebaut wird. Mit ihren kanalartigen Profilierungen, die in den nach oben offenen Kanälen durch Querstaulamellen voneinander getrennte Stauwasserkammern schaffen, wird Niederschlagswasser bis zur Oberkante der Querstaulamellen gesammelt. Auf den Distanzlamellen ist ein Geotextilvlies verklebt, damit die darunter befindlichen Hohlräume nicht durch daraufliegende Schichten ausgefüllt werden können. Innerhalb des miteinander verbundenen Stauwasserkammersystems wird Niederschlagswasser so angestaut, daß es darauf verlegten Begrünungen länger zur Verfügung steht.

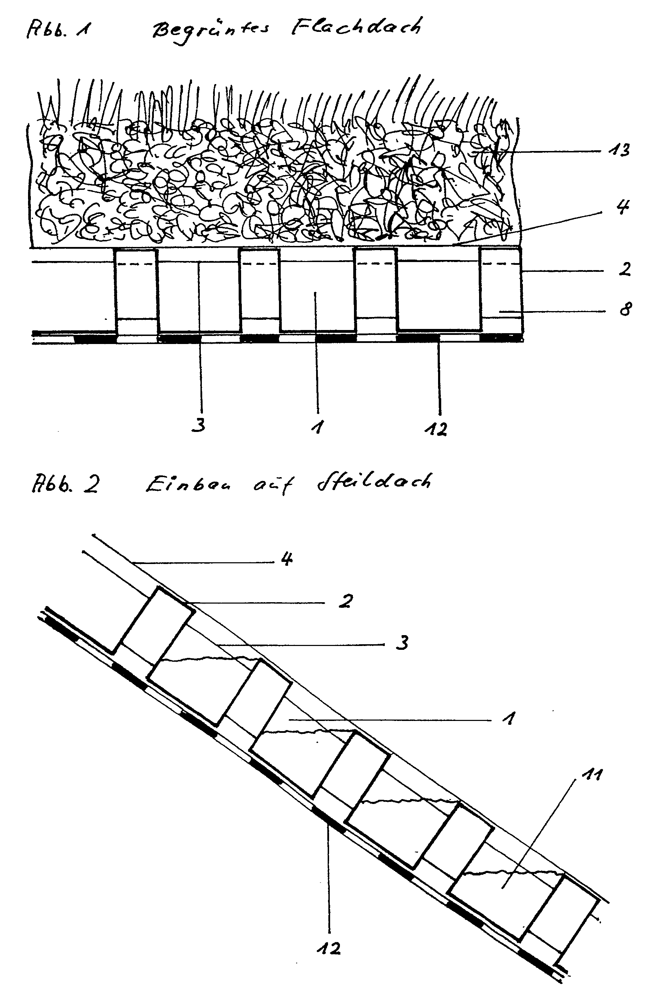

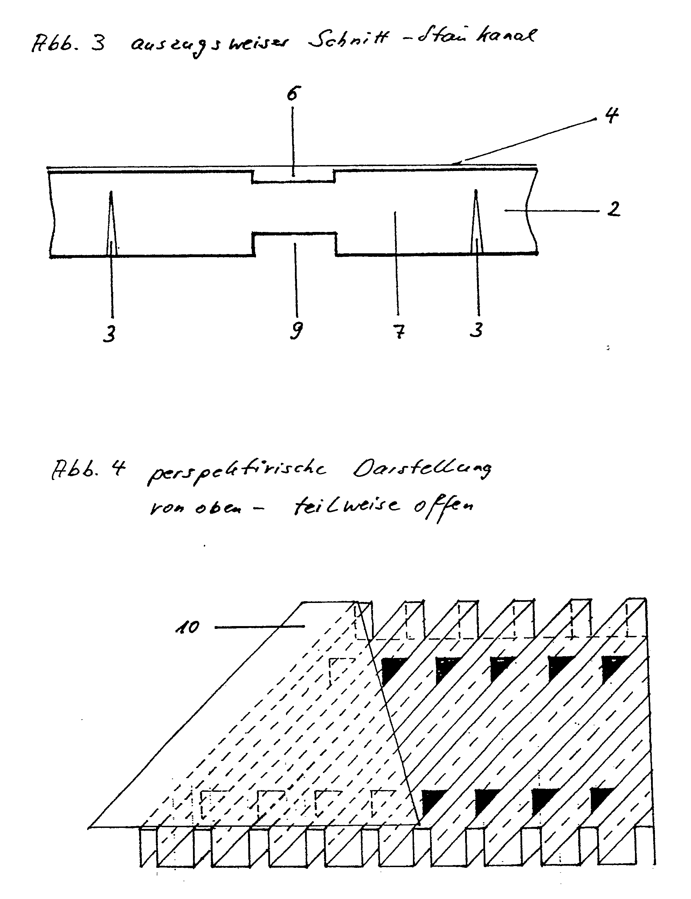

Abb. 4 perspektivische Darstellung von oben — teilweise offen

10

Die Erfindung betrifft eine Begrünungs-Drain und Staumatte aus Kunststoff, die unter zu begrünenden Dachflächen als Be- und Entwässerungsschicht eingesetzt wird.

Es sind Produkte bekannt, die begrünte Flächen drainieren, wobei das Niederschlagswasser unmittelbar abgeführt wird ohne, daß dies für die Begrünung weiter zur Verfügung steht.
Weiterhin sind Noppenbahnen bekannt, in deren Vertiefungen bzw. Mulden auf nur ca. 10 bis 20 % der Gesamtfläche Wasser angestaut werden kann.
Weiterhin sind formgeschäumte dicke Polystyrol-Elemente mit Ausnehmungen bekannt, die durch ein Vlies abgedeckt sind.

Der Nachteil der bisher bekannten Produkte besteht darin, daß:

1. nur drainiert und kein Wasser angestaut wird
2. nur geringe Mengen Niederschlagswasser gestaut bzw. gesammelt werden kann
3. Bei Produkten, die die vorgenannten Nachteile nicht aufweisen, deren Einbaudicke in Relation zum Drain- und Speichervolumen überproportional hoch ist und damit die Einsatzmöglichkeiten drastisch begrenzt werden.
4. vorgenannte Produktionstypen nicht bzw. nur sehr eingeschränkt auf Steildächern eingesetzt werden können
5. die Druckfestigkeit vorgenannter Produkte sehr begrenzt ist.

Der Erfindung liegt die Aufgabe zugrunde, begrünte Flächen sowohl auf horizontalen wie auf geneigten Ebenen zu bewässern, zu drainieren und ausreichend große Stauräume für Niederschlagswasser zu schaffen bei nur geringer Einbaudicke.

Diese Aufgabe wird durch Anspruch 1 erfüllt.

Mit der Erfindung werden folgende Vorteile für darauf vorgesehene begrünte Flächen erzielt:

1. Bezogen auf die Einbaudicke wird ein überproportional großer Stauraum für Niederschlagswasser geschaffen.
2. Gleichzeitig wird Überschußwasser der Begrünungsschicht drainiert.
3. Die große Druckfestigkeit, wie sie unter dikken Humusschichten erforderlich ist.
4. Die Art und Beschaffenheit des erfindungsgemäßen Gegenstandes gestattet auch einen äußerst wirksamen Einbau auf Steildächern.

Ein Ausführungsbeispiel wird dargestellt und beschrieben.

Abb. 1  begrüntes Flachdach
Abb. 2  Einbau auf Steildach
Abb. 3  auszugsweiser Schnitt - Staukanal in längsrichtung
Abb. 4  perspektivische Darstellung - teilweise von oben offen

Die Begrünungs-Drain- und Staumatte besteht aus einer profilierten steifen Kunststoffbahn, die so geformt ist, daß Staukanäle (1) zwischen den Distanzlamellen (2) entstehen, die durch eine wasserdurchlässige Abdeckbahn (4) von oben vor Beeinträchtigungen durch aufliegende Schichten geschützt sind. In variabelen eingearbeitete Querstaulamellen (3), deren Oberkante tiefer liegt als die Oberkante der Distanzlamellen, begrenzen die Staukanäle, so daß Stauwasserkammern (5) entstehen. Da das Wasser in geringerer Höhe angestaut wird, als die Gesamtdicke der Matte, besteht kein Kapillarkontakt von daraufliegenden Schichten zu gestautem Niederschlagswasser.
Damit bei partieller Einwirkung von Niederschlag oder durch künstliches Bewässern eine gleichmäßige Verteilung des einwirkenden Wassers ermöglicht wird, bilden nach oben offene Ausnehmungen Distanzlamellenüberläufe (6), über die die Staukanäle (1) untereinander verbunden sind.
Ausnehmungen gleicher Art sind von unten in die Distanzlamellen eingearbeitet, die als Distanzlamellen querkanal (9) die Hohlräume der Distanzlamelleninnenkanäle (8) verbinden.
Auf die Abdichtung gelangendes Überschußwasser kann so in alle Richtungen auf der vorhandenen Abdichtung (12) abgeführt werden.
Auf dem Steildach verlegte Begrünungs-Drain- und Staumatten sind durch Ihre Form in der Lage, bezogen auf die Einbaudicke überproportional viel Stauwasser (11) zu sammeln.
Begrünungs-Drain- und Staumatten sind besonders druckfest durch die Art der Profilierung und des dafür geeigneten Kunststoffes.

Erklärung zu den Abbildungen

1.  Staukanal
2.  Distanzlamelle
3.  Querstaulamelle
4.  wasserdurchlässige Abdeckbahn
5.  Stauwasserkammer
6.  Distanzlamellenüberlauf
7.  Distanzlamellenwand
8.  Distanzlamelleninnenkanal
9.  Distanzlamellenquerkanal
10. seitliche Überlappung
11. gestautes Wasser
12. Abdichtung
13. Begrünung

**Patentansprüche**

1.  Begrünungs-Drain- und Staumatte aus profiliertem, verformungsstabilem Kunststoff für das Anlegen von Be- und Entwässerungsschichten unter Begrünungen auf Flach- und Steildächern dadurch gekennzeichnet, daß die Begrünungs-Drain- und Staumatte aus Staukanälen (1) und Distanzlamellen (2) besteht, die durch eine aufgeklebte oder thermisch verbundene wasserdurchlässige Abdeckbahn (4) von oben abgedeckt ist, deren Staukanäle (1) durch Querstaulamellen (3) in Stauwasserkammern (5) unterteilt sind, die unter einander Verbindung durch obenliegende Ausnehmungen der Distanzlamellen (2) - sogenannte Distanzlamellenüberläufe (6) - erhalten. Von unten in die Distanzlamellenstege eingearbeitete Ausnehmungen bilden Distanzlamellenquerkanäle (9) und verbinden die Distanzlamelleninnenkanäle (8) untereinander.

2.  Begrünungs-Drain- und Staumatte nach Anspruch 1 dadurch gekennzeichnet, daß die Staukanäle (1) einen rechteckigen, quadratischen, trapezförmigen oder gerundeten Querschnitt aufweisen.

3.  Begrünungs-Drain- und Staumatte nach Anspruch 1 und 2 dadurch gekennzeichnet, daß die wasserdurchlässige Abdeckbahn (4) aus Kunstfaservlies oder vergleichbaren Stoffen besteht.

4.  Begrünungs-Drain- und Staumatte nach Anspruch 1 bis 3 dadurch gekennzeichnet, daß die wasserdurchlässige Abdeckbahn seitlich überlappt.

5.  Begrünungs-Drain- und Staumatte nach Anspruch 1 bis 4 dadurch gekennzeichnet, daß die Distanzlamellen (2) dünnwandig sind und vollständig aus Kunststoff ohne dazwischenliegenden Hohlraum bestehen, so daß keine Distanzlamelleninnenkanäle (8) vorhanden sind.

Abb. 1    Begrüntes Flachdach

Abb. 2    Einbau auf Steildach

Abb. 3 auszugsweiser Schnitt – Staukanal

Abb. 4 perspektivische Darstellung
von oben – teilweise offen